# EUROPEAN PATENT APPLICATION

(11) **EP 4 852 590 A1**
(43) Date of publication of application: **09.12.2026**
(21) Application number: 25749227.2
(22) Date of filing: 31.01.2025
(51) Int. Cl.: H04W 72/232, H04W 48/14, H04W 72/0446

(54) **METHOD AND APPARATUS FOR CONFIGURING REQUEST OPERATION FOR SYSTEM INFORMATION IN WIRELESS COMMUNICATION**

(30) Priority: 01.02.2024 KR 20240016172; 24.01.2025 KR 20250011317
(71) Applicant: KT Corporation, Seongnam-si, Gyeonggi-do 13606 (KR)
(72) Inventor: PARK, Ki Hyeon, Seongnam-si Gyeonggi-do 13606 (KR); PARK, Kyu Jin, Seongnam-si Gyeonggi-do 13606 (KR)
(74) Representative: Santarelli
(86) International application number: PCT/KR2025/099149
(87) International publication number: WO 2025/165188

(57) **Abstract**

Provided is a method of configuring a request operation of system information by a UE in wireless communication. The method may include: confirming that a system information block is not transmitted after a transmission of a synchronization signal block from a base station; receiving configuration information comprising uplink resource information for transmitting a request signal for the system information; and transmitting the request signal for the system information based on the configuration information.

## Description

### Technical Field

The present disclosure proposes a method and apparatus for configuring a request operation of system information in a radio access network ("5G", "NR [New Radio]") or a next-generation radio access network (meaning "5G-Advanced", "6G", or a subsequent 3GPP radio access network).

### Background Art

3GPP continues research and development on wireless communication technology. In a wireless communication system, energy efficiency is also a very important consideration in addition to latency, reliability, and availability.

A base station must transmit predetermined system information together with a synchronization signal to enable access by a UE. The transmission of the predetermined system information is performed regardless of the number of UEs capable of accessing a network, resulting in unnecessary transmission even when there are almost no UEs capable of accessing.

Therefore, a detailed design for a method of enabling more efficient transmission and reception of system information is needed.

### Summary

### Problem to be Solved

The present disclosure may provide a method and apparatus for configuring a request operation of system information in wireless communication.

### Means for Solving the Problem

In one aspect, the present disclosure may provide a method of configuring a request operation of system information by a UE in wireless communication. The method may include: confirming that a system information block is not transmitted after a transmission of a synchronization signal block from a base station; receiving configuration information comprising uplink resource information for transmitting a request signal for the system information; and transmitting the request signal for the system information based on the configuration information.

In another aspect, the present disclosure may provide a method of configuring a request operation of system information by a base station in wireless communication. The method may include: informing a UE that a system information block is not transmitted after a transmission of a synchronization signal block from the base station; transmitting configuration information comprising uplink resource information for receiving a request signal for the system information; and receiving the request signal for the system information based on the configuration information.

In another aspect, the present disclosure may provide a UE configuring a request operation of system information in wireless communication. The UE may include: a transmitter; a receiver; and a controller configured to control operations of the transmitter and the receiver, wherein the controller is configured to confirm that a system information block is not transmitted after a transmission of a synchronization signal block from a base station, receive configuration information comprising uplink resource information for transmitting a request signal for the system information, and transmit the request signal for the system information based on the configuration information.

In another aspect, the present disclosure may provide a base station configuring a request operation of system information in wireless communication. The base station may include: a transmitter; a receiver; and a controller configured to control operations of the transmitter and the receiver, wherein the controller is configured to inform a UE that a system information block is not transmitted after a transmission of a synchronization signal block from the base station, transmit configuration information comprising uplink resource information for receiving a request signal for the system information, and receive the request signal for the system information based on the configuration information.

### Advantageous Effects

According to the embodiments, a method and an apparatus for configuring a request operation for system information in wireless communication may be provided to enable efficient transmission of the system information.

In addition, the base station does not transmit system information until the base station receives a request for the system information, thereby reducing operational power consumption in an environment with few users.

### Brief Description of Drawings

FIG. 1 is a diagram illustrating a structure of an NR wireless communication system.
FIG. 2 is a diagram for explaining a frame structure in an NR system.
FIG. 3 is a diagram for explaining a resource grid supported by a radio access technology.
FIG. 4 is a diagram for explaining a bandwidth part supported by a radio access technology.
FIG. 5 is a diagram illustrating a synchronization signal block in a radio access technology.
FIG. 6 is a diagram for explaining a random access procedure in a radio access technology.
FIG. 7 is a diagram for explaining a CORESET.
FIG. 8 is a flowchart illustrating a procedure of configuring a request operation of system information by a UE in wireless communication according to an embodiment.
FIG. 9 is a flowchart illustrating a procedure of configuring a request operation of system information by a base station in wireless communication according to an embodiment.
FIG. 10 is a block diagram showing a UE according to an embodiment.
FIG. 11 is a block diagram showing a base station according to an embodiment.

### Detailed Description

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, W-iFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

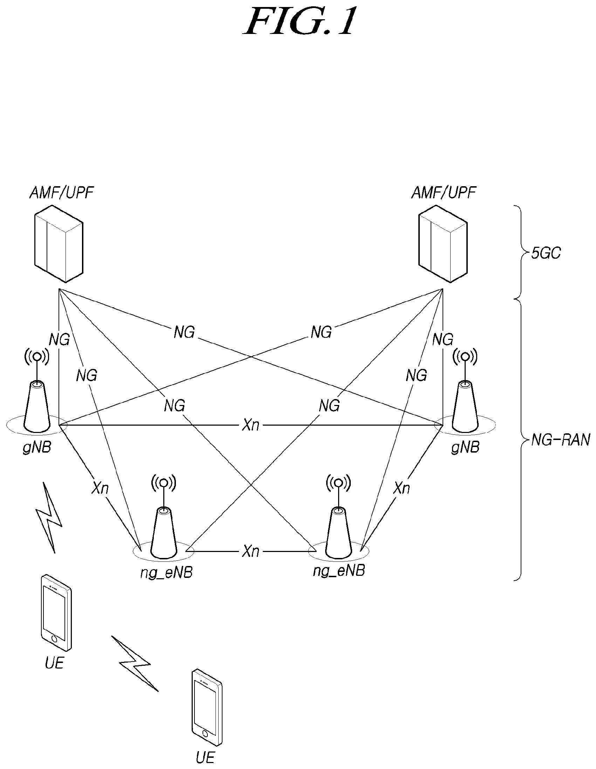

FIG. 1 is a view schematically illustrating an NR system to which the present embodiment is applicable.

Referring to FIG. 1, the NR system is divided into a 5G core network (5GC) and an NG-RAN part. The NG-RAN comprises gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to comprise an access and mobility management function (AMF) for managing a control plane, such as a UE connection and mobility control function, and a user plane function (UPF) controlling user data. NR supports both frequency bands below 6 GHz (frequency range 1 (FR1)) and frequency bands equal to or greater than 6 GHz (frequency range 2 (FR2)).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

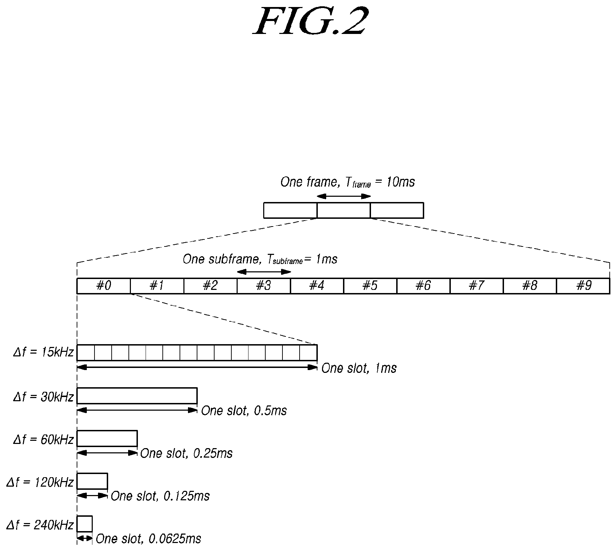

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that comprises 10 subframes each having the same length of 1 ms and has a length of 10 ms is defined in the frame structure in NR. One frame may be divided into half frames of 5 ms, and each half frame comprises 5 subframes. In the case of a subcarrier spacing of 15 kHz, one subframe comprises one slot, and each slot comprises 14 OFDM symbols. FIG. 2 is a view for explaining a frame structure in an NR system to which the present embodiment may be applied. Referring to FIG. 2, a slot comprises 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot comprises 14 OFDM symbols, but one subframe may comprise two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties comprise at least one of delay spread, Doppler spread, a frequency shift, an average received power, and a received timing.

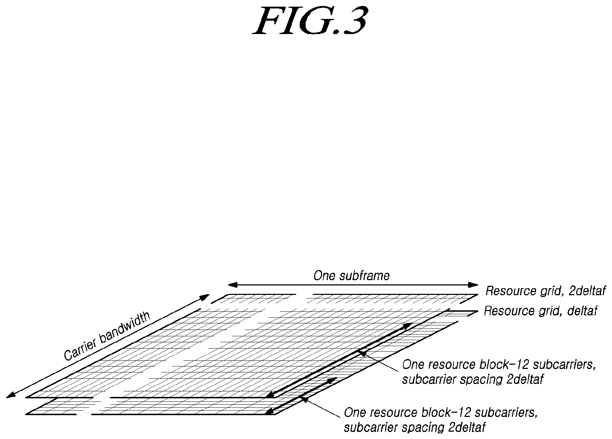

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block comprises 12 subcarriers and is defined only in the frequency domain. In addition, a resource element comprises one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

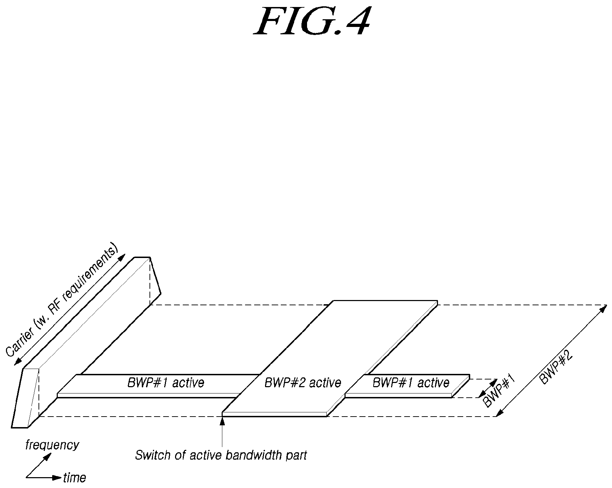

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may comprise a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicate with a base station.

The cell search is a procedure of the UE for synchronizing with a cell of a corresponding base station using a synchronization signal block (SSB) transmitted from the base station and acquiring a physical-layer cell ID and system information.

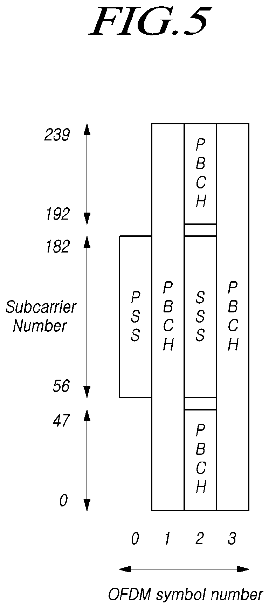

FIG. 5 illustrates an example of a synchronization signal block in a radio access technology in accordance with embodiments of the present disclosure.

Referring to FIG. 5, the SSB comprises a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot comprises two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) comprises minimum information for the UE to receive remaining minimum system information (RMSI) broadcast by the network. In addition, the PBCH may comprise information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 comprises information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

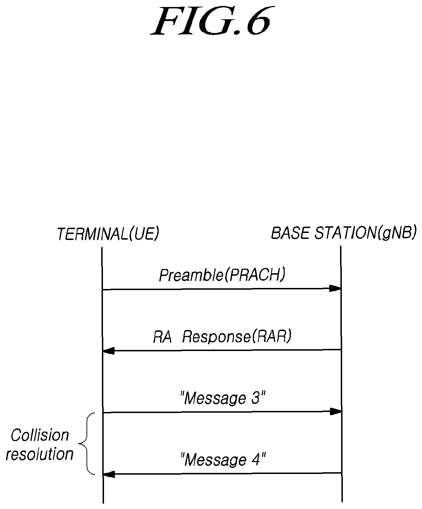

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that comprises consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may comprise a random access preamble identifier (ID), UL Grant (uplink radio resource), a temporary C-RNTI (temporary cell-radio network temporary identifier), and a TAC (time alignment command). Since one random access response may comprise random access response information for one or more UEs, the random access preamble identifier may be comprised in order to indicate the UE for which the comprised UL Grant, temporary C-RNTI, and TAC are valid. The random access preamble identifier may be an identifier of the random access preamble received by the base station. The TAC may be comprised as information for the UE to adjust uplink synchronization. The random access response may be indicated by a random access identifier on the PDCCH, i.e., a random access-radio network temporary identifier (RA-RNTI).

Upon receiving a valid random access response, the UE processes information comprised in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be comprised in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

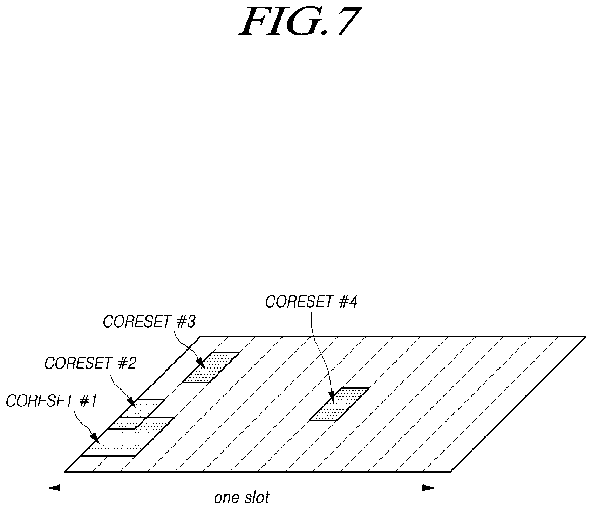

FIG. 7 illustrates CORESET.

Referring to FIG. 7, CORESETs may exist in various forms within a carrier bandwidth in a single slot, and the CORESET may comprise a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth ranging from1.4 MHz to 20 MHz when configuring a single LTE CC, and a typical LTE UE supports a transmission/reception capability of a bandwidth of 20 MHz for a single LTE CC.

However, NR is designed to support NR UE having different transmission/reception bandwidth capabilities over a single wideband NR CC. Accordingly, one or more bandwidth parts (BWPs) including subdivided bandwidths may be configured for an NR CC, thereby supporting flexible and wider bandwidth operations through configuration and activation of different bandwidth parts for respective UEs.

Specifically, one or more bandwidth parts may be configured for a UE in a single service cell in NR, and the UE may activate one downlink (DL) bandwidth part and one uplink (UL) bandwidth part and use the activated downlink and uplink bandwidth parts for uplink/downlink data transmission/reception in the corresponding serving cell. In addition, whe a plurality of serving cells is configured for the UE (i.e., carrier aggregation (CA) is applied to the UE), the UE may also activate one downlink bandwidth part and/or one uplink bandwidth part in each serving cell and use the activated downlink bandwidth part and/or uplink bandwidth part for uplink/downlink data transmission/reception using radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

Simultaneously activation and use of a plurality of downlink and/or uplink bandwidth parts may be defined according to the capability of the UE and the configuration of the bandwidth parts in a serving cell. However, NR Release 15 (rel-15) defined activation and use of only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages related to NR (New Radio) may be interpreted according to meanings used at present or in the past, or meanings to be used in the future.

The present disclosure provides a method for a UE to request transmission of system information from a wireless base station in a 3GPP NR system. In particular, the present disclosure provides a method for a UE to request transmission of system information in an environment in which an energy saving function is implemented and a base station does not transmit, by default, system information following transmission of a synchronization signal block. The method for requesting transmission of system information will be described in detail below.

In typical 3GPP NR, ten or more types of system information are transmitted using blocks such as SIB1 (System Information Block 1), SIB2, and the like. Among the types of system information, information following SIB2 may be transmitted upon request of a UE, but SIB1, which includes information essential for connection configuration such as frequency bands supported by a UE for transmission and reception, SCS, and a random access resource space, is always transmitted in a resource space specified by a standard following transmission of a synchronization signal. Therefore, a UE failing to receive SIB1 for various reasons may be unable to perform a subsequent network access procedure. However, transmission of SIB1 following every synchronization signal continuous as long as the synchronization signal is transmitted even when no UE is capable of accessing the network, thereby increasing power consumption. Analysis indicates potential power savin when a base station having little actual traffic does not transmit SIB1; the power saving may reach 50% or more in some scenarios.

Accordingly, there is a need for a specific method for a UE not currently in a connected state to request SIB1 from a cell not transmitting SIB1.

A typical NR SSB (Synchronization Signal Block) includes an MIB (Master Information Block) and some additional information in a payload and is largely composed of a frequency location, selection of a PSS/SSS (primary synchronization signal/secondary synchronization signal), a location and value of a DMRS (DeModulation Reference Signal) in a PBCH (Physical Broadcast Channel), and content in the PBCH. Among the foregoing SSB elements, the PSS and SSS mainly provide cell ID-related information, and the MIB provides frame number, subcarrier spacing information, band location information, and barring information among basic information as basic information for cell access by a UE, as well as location information for CORESET zero used to deliver scheduling information of a PDSCH through which SIB1 is transmitted for SIB1 transmission. The additional information mainly includes some of the remaining bits of the frame number or remaining band location information not accommodated in the MIB.

In particular, a parameter referred to as k_SSB indicates a frequency offset between the starting frequency of a current synchronization signal and Point A, a reference point of the band, and reqresents the frequency offset using a 5-bit value in frequency range 1 (FR1) and a 4-bit value in frequency range 2 (FR2). When the value of k_SSB is 24 or more in the case of FR1 and 12 or more in the case of FR2, the UE determines SIB1 is not transmitted, and when k_SSB has a specific value (between 24 and 29 for FR1 and between 12 and 13 for FR2), an alternative SSB frequency location for receiving SIB1 may be indicated through existing information related to the CORESET zero location.

The existing NR system is configured to support an alternative synchronization signal in which all synchronization signals include SIB1 configuration information or otherwise, must include SIB1 location information, alternatively, SIB1 location information. If the alternative synchronization signal does not include valid SIB1 configuration information, the UE does not access the cell associated with the alternative synchronization signal. Therefore, unless SIB1 is continuously transmitted in at least one band regardless of the presence or absence of a UE, the UE cannot establish a connection with the base station.

The present disclosure provides a method for a base station to indicate, through synchronization signal information, a resource for a UE to request transmission of system information from the base station in a 3GPP NR system. In particular, the present disclosure provides a method for informing a UE of the availability of an on-demand SIB request or of a resource through which the UE may request SIB1 transmission without first receiving SIB1.

Hereinafter, a method for a UE to configure a request operation for system information in wireless communication will be described in detail with reference to the accompanying drawings.

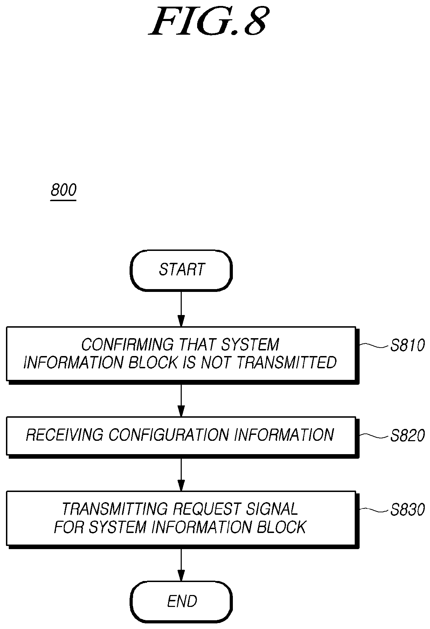

FIG. 8 is a diagram illustrating a procedure 800 for a UE to configure a request operation for system information in wireless communication according to an embodiment.

Referring to FIG. 8, the UE may confirm non-transmission of a system information block following transmission of a synchronization signal block from a base station (S810).

Generally, in order to access a base station, a UE receives a synchronization signal block (SSB) from the base station. The synchronization signal block includes a Master Information Block (MIB) and predetermined additional information. The MIB provides location information for CORESET 0 for delivering scheduling information for a PDSCH carrying SIB1 (System Information Block 1). The UE may receive the SIB1 and establish a connection with the base station using information in the SIB1.

However, when a cell to which the UE intends to connect is configured for On-Demand SIB1 transmission upon a request from the UE, the UE cannot receive the SIB1 without making a separate request.

For on-demand SIB1 transmission, the UE may receive information indicating a cell configuration for transmitting the system information block upon request (On-Demand SIB1), and confirm non-transmission of the system information block. The information indicating a cell configuration for transmitting the SIB1 on-demand may include either information for preventing a legacy UE lacking support for an On-Demand SIB1 function from accessing the base station or information notifying a UE supporting the On-Demand SIB1 function whether the base station supports the On-Demand SIB1 function.

According to an example, the information indicating a cell configuration for transmitting the system information block upon request may include a frequency offset for the synchronization signal block equal to or greater than a first reference value in frequency range 1 (FR1) and equal to or greater than a second reference value in frequency range 2 (FR2). Specifically k_SSB is a parameter indicating the frequency offset, may be set to an invalid value, namely, 24 or more in the case of FR1 and 12 or more in the case of FR2. For example, when the base station transmits a value of k_SSB of 30 in FR1 or 14 in FR2, the UE may identify the received k_SSB value as invalid and determine a need to transmit an SIB1 request to the base station. In another example, the first reference value may be set to be greater than the second reference value.

Referring back to FIG. 8, the UE may receive configuration information including uplink resource information for transmitting a request signal for the system information (S820).

According to an embodiment, the configuration information may be generated based on cell configuration information of a cell to which the UE was previously connected. Specifically, the base station may obtain the configuration information based on cell configuration information received from a previous cell. The cell configuration information may include information related to an SSB configuration value for a cell to which On-Demand SIB1 is applied and information such as a relative uplink resource location, format, and the like. The configuration information may include information on at least one of a frequency band, a frequency domain location, a time domain location, a subcarrier spacing, a signal format, and a sequence used for transmission of the request signal for the system information.

Specifically, the configuration information may include at least one type of uplink resource information, such as uplink transmission space band information in which an SIB request may be transmitted, frequency location information within the uplink transmission space band in which the SIB request may be transmitted, time location information within the uplink transmission space band in which the SIB request may be transmitted, or uplink transmission space band subcarrier spacing information in which the SIB request may be transmitted.

In addition, the configuration information may further include at least one of signal format information to be used for the SIB request, such as a PRACH format, a sequence, a PUCCH, and an MCS, a requestable SIB type, PDSCH resource allocation information for an SIB to be transmitted upon request, new CORESET information for SIB scheduling information to be transmitted upon request or information indicating whether to reuse a current CORESET, resource allocation information for an ACK/NACK or other feedback to be transmitted when the UE sends the SIB request, or information such as an RNTI to be used when the UE transmits the request.

Referring back to FIG. 8, the UE may transmit a request signal for the system information based on the configuration information (S830).

The UE may configure the request signal for the system information based on the received configuration information and transmit the configured request signal using an uplink resource.

According to an embodiment, the UE may configure the format of the request signal for the system information as a random access preamble (RA preamble) or a portion of the random-access preamble. Accordingly, at least some PRACH resources may be used for the SIB1 request. In an example, the request signal may include at least one of information identifying sequence selected from a plurality of preset sequences, a cyclic shift value, a transmission resource space, or information identifying a RACH occasion space selected from a plurality of pre-configured RACH occasion spaces defined by a combination of the preset sequence, the cyclic shift alue, and the transmission resource space.

Upon receiving the SIB1 request from the UE, the base station may transmit the SIB1 to the UE.

According to the embodiments, a method and apparatus may be provided for configuring a request operation for system information in wireless communication to enable efficient transmission of system information. In addition, the base station does not transmit system information until the base station receives a request for the system information, thereby reducing operational power consumption in an environment with few users.

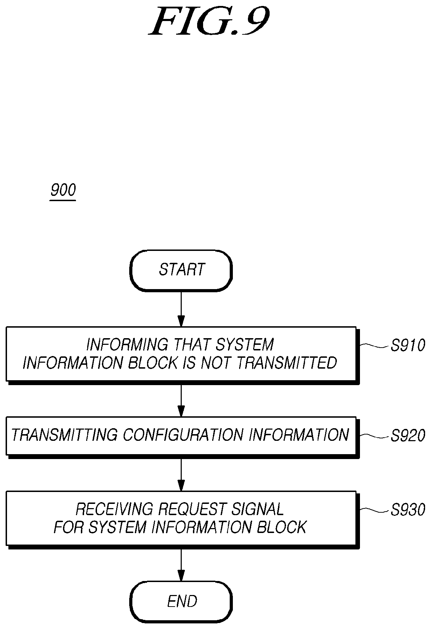

FIG. 9 is a diagram illustrating a procedure 900 for a base station to configure a request operation for system information in wireless communication according to an embodiment. The description provided above with reference to FIG. 8 may be omitted to avoid repetition, and the omitted content may apply in substantially the same manner to the base station unless application of omitted description contradict the technical spirit of the present disclosure.

Referring to FIG. 9, the base station may inform the UE of non-transmission of a system information block following transmission of a synchronization signal block from the base station (S910).

When the base station is configured for On-Demand SIB1 transmission upon a request from the UE, the base station does not transmit the SIB1 unless the UE transmits a separate request.

For on-demand SIB1 transmission, the base station may inform the UE of non-transmission of the system information block by transmitting information indicating a cell configuration for transmitting the system information block upon request (On-Demand SIB1). The information indicating a cell configuration for transmitting SIB1 on-demand may include either information for preventing a legacy UE lacking support an On-Demand SIB1 function from accessing the base station or information notifying a UE supporting the On-Demand SIB1 function whether the base station supports the On-Demand SIB1 function.

According to an embodiment, the information indicating a cell configuration for transmitting the system information block upon request may include a frequency offset for the synchronization signal block equal to or greater than a first reference value in frequency range 1 (FR1) and equal to or greater than a second reference value in frequency range 2 (FR2). Specifically, k_SSB, a parameter indicating the frequency offset, may be set to an invalid value, namely, 24 or more for FR1 and 12 or more for FR2. For example, when the base station transmits a k_SSB value of 30 in FR1 or 14 in FR2, the UE may identify the received k_SSB value as invalid and determine a need to transmit an SIB1 request to the base station. In another example, the first reference value may be set to be greater than the second reference value.

Referring back to FIG. 9, the base station may transmit configuration information comprising uplink resource information for receiving a request signal for the system information (S920).

According to an embodiment, the configuration information may be generated based on cell configuration information for a cell to which the UE was previously connected. Specifically, the base station may obtain the configuration information based on cell configuration information received from a previous cell. The cell configuration information may include information related to an SSB configuration value for a cell to which On-Demand SIB1 is applied and information such as a relative uplink resource location, format, and the like. The configuration information may include information on at least one of a frequency band, a frequency domain location, a time domain location, a subcarrier spacing, a signal format, and a sequence used for the transmission of the request signal for the system information.

Specifically, the configuration information may include at least one type of uplink resource information, such as uplink transmission space band information in which an SIB request may transmitted, frequency location information within an uplink transmission space band in which the SIB request may be transmitted, time location information within the uplink transmission space band in which the SIB request may be transmitted, or uplink transmission space band subcarrier spacing information in which the SIB request may be transmitted.

In addition, the configuration information may further comprise at least one of signal format information to be used for the SIB request, such as a PRACH format, a sequence, a PUCCH, or an MCS, a requestable SIB type, PDSCH resource allocation information for an SIB to be transmitted upon request, new CORESET information for SIB scheduling information to be transmitted upon request or information indicating whether to reuse a current CORESET, resource allocation information for an ACK/NACK or other feedback to be transmitted when the UE transmits the SIB request, or information such as an RNTI to be used when the UE transmits the request.

Referring back to FIG. 9, the base station may receive the request signal for the system information based on the configuration information (S930).

The base station may receive, from the UE, the request signal for the system information configured based on the configuration information using the uplink resource information included in the configuration information.

According to an embodiment, the UE may configure the format of the request signal for the system information as a random access preamble (RA preamble) or a portion of the random-access preamble. Accordingly, at least some PRACH resources may be used for the SIB1 request. In an example, the request signal may include at least one of information identifying sequence selected from a plurality of pre-configured sequences, a cyclic shift value, and a transmission resource space, or information identifying a RACH occasion space selected from a plurality of pre-configured RACH occasion spaces defined by a combination of the preconfigured sequence, the cyclic shift value, and the transmission resource space.

Upon receiving the SIB1 request from the UE, the base station may transmit the SIB1 to the UE.

According to the embodiments, a method and apparatus may be provided for configuring a request operation for system information in wireless communication to enable efficient transmission of the system information. In addition, the base station does not transmit system information until the base station receives a request for the system information, thereby reducing operational power consumption in an environment with few users.

Hereinafter, each embodiment related to a method of configuring a request operation for system information in wireless communication will be described in detail with reference to the accompanying drawings.

The present disclosure primarily provides a method for indicating a cell configuration for on-demand SIB1 transmission and a method for informing a UE of a resource for transmitting a request signal.

### Embodiment 1. Method for indicating a cell configuration for on-demand SIB1 transmission

The method of Embodiment 1 may be divided into a method for preventing a legacy UE lacking support for an SIB1 request function from accessing the base station and a method for informing a UE supporting the SIB1 request function whether the base station supports the SIB1 request function.

### ① Method for preventing access by legacy UE

A base station not transmitting SIB1 indicates barring (Barring) during a synchronization process to prevent access to a cell and avoid a malfunction of a legacy UE lacking supporting for an On-Demand SIB1 function. The barring may be indicated by setting the cellBarred field of a MIB to Enabled (Enabled). Alternatively, an invalid k_SSB value indicating a frequency offset may be used, namely, a value of 24 or more for FR1 and 12 or more for FR2. Alternatively, even when k_SSB is valid, controlResourceSetZero and searchSpzceZero, parameters related to a CORESET zero location specified in a table, may be set to reserved values not provided in the table. Alternatively, a combination of two or more of the foregoing methods may be used.

### ② Method for indicating whether a base station supports a SIB1 request function

Based on a specific combination of information delivered by a base station through an SSB, a UE supporting On-Demand SIB1 may recognize the base station as requiring a SIB1 request. For greater efficiency, a legacy UE may recognize the specific combination as Barring. For example, when k_SSB is transmitted as a specific value or one of a plurality of values, when cellBarred is additionally set to Enabled, or when k_SSB has a specific value or one of a plurality of values and controlResourceSetZero and searchSpzceZero are set to a specific value or one of a plurality of values, the UE may identify the abse station as requiring a SIB1 request. The specific value referred to herein may be a constant or may be a value determined based on a cell ID, k_SSB, a system frame number, or other values transmitted in the SSB. In determining the specific combination parameters such as a GSCN (Global Synchronization Channel Number) value, a cell ID, a frame number, an SSB index, an SSB arrangement pattern, or the like may additionally or independently be used when the parameters are not involved in barring a legacy UE.
- Example 1: In FR1, a base station may transmit a k_SSB value of 30, thereby enabling a UE to identify the base station as requiring a SIB1 request.
- Example 2: In FR1, when an SCS of an SS/PBCH is 15 kHz and an SCS of a PDCCH is 15 kHz, a base station may transmit a controlResourceSetZero value of 15, thereby enabling a UE to identify the base station as requiring a SIB1 request.
- Example 3: A base station may use a specific GSCN value for an SSB and set cellBarred to Enabled, thereby enabling a UE to identify the base station as requiring a SIB1 request.

### Embodiment 2. Method for informing a UE of a resource for transmitting a request signal

The method of Embodiment 2 may be divided into a method requiring a UE to determine whether a base station transmitting an SSB according to Embodiment 1 requires an SIB1 request and a method not requiring the UE to make the determination.

### ① Method requiring a UE to determine whether a base station requires an SIB1 request

When a UE recognizes, according to Embodiment 1 or other method, a base station as being configured to receive an SIB1 request, the UE may transmit an SIB1 request signal using a resource indicated by a k_SSB value, a controlResourceSetZero value, and a searchSpzceZero value. For example, the location of an uplink resource may be specified by controlResourceSetZero, and a signal format may be specified by searchSpzceZero. The uplink resource location may be the same as a resource space indicated for an existing CORESET zero or may be specified in a separate table.

In another method, a location determined relative to an SSB may be specified by a standard. For example, a specific SSB is always transmitted in a slot preceding an uplink transmission, and a relationship between the SSB and an SIB1 request transmission resource location within the slot may be specified. Whether to use the relative-location method may be determined according to band conditions or the like, and when the relative-location method is not used, a method not requiring the UE to determine whether the base station requires an SIB1 request may be applied instead.
- Example 1: Band or slot information may be indicated by controlResourceSetZero and/or searchSpzceZero. For example, when a frequency band containing an SSB is a TDD (Time Division Duplex) band, slot offset information may be included, and when the frequency band is an FDD ((Frequency Division Duplex) band, band information may be included, and the slot offset information and the band information may be multiplexed. The band or slot information may be configured in a table form (e.g., tabular form) or may be represented by a band number or a band index within a paired band.
- Example 2: For an FDD band, or when a GSCN corresponds to a specific value/set of a specific range, instead of using the method described in Example 1, a method not requiring the UE to determine whether the base station requires an SIB1 request may be used.

### ② Method not requiring a UE to determine whether a base station requires a SIB1 request

The method not requiring UE determination is applicable regardless of whether a UE identifies, according to Embodiment 1 or another method, a base station as requiring an SIB1 request. For the method not requiring UE determination, the base station may additionally define a new DCI for transmission in a CORESET zero resource indicated by a ControlResourceSetZero value and a searchSpzceZero value. The new DCI may be defined as, for example, as DCI format 2-x, and may be scrambled with an SI-RNTI, another predefined constant, or an RNTI derivable from information obtainable from an SSB, such as a cell ID. The new DCI may include one or more of the following type of information.
- Uplink transmission space band information in which a UE may transmit an SIB request
- Frequency location information within an uplink transmission space band in which the UE may transmit an SIB request
- Time location information within an uplink transmission space band in which the UE may transmit an SIB request
- Subcarrier spacing information of an uplink transmission space band in which the UE may transmit an SIB request
- A signal format to be used by the UE for an SIB request, such as a physical random access channel (PRACH) format, a sequence to be used, a physical uplink control channel (PUCCH) type, a modulation coding scheme (MCS), or the like.
- SIB types the UE may request
- PDSCH resource allocation information for transmitting an SIB upon a request from the UE
- New CORESET information for transmitting SIB scheduling information upon a request from the UE, or information indicating whether to reuse a current CORESET
- Resource allocation information for transmitting an ACK/NACK or other feedback when the UE transmits an SIB request
- An RNTI to be used when the UE transmits a request

In another method, the base station may acquire one or more of the foregoing types of information regarding the request transmission resource based on cell configuration information received from a previous cell. The cell configuration information may include information related to an SSB configuration value of a cell to which On-Demand SIB1 is applied and information such as a relative uplink resource location, a format, and the like.

The foregoing method does not require the UE to determine whether a base station requires an SIB1 request, but may also be applied when the UE makes the determination.

In addition, the present disclosure provides a method for a UE to request transmission of system information from a wireless base station in a 3GPP NR system and a method for a base station to transmit SIB1 in response to a request. In particular, a request-message format and a corresponding SIB1 transmission configuration method are provided.

Accordingly, the present disclosure provides a method for configuring an SIB1 request signal and a method for a base station to transmit SIB1 in response to an SIB1 request.

### Embodiment 3. Method for configuring an SIB1 request signal

The method of Embodiment 3 provides a signal format and content for transmission by a UE over an uplink resource identified by uplink resource information received for transmitting an SIB request.

### ① Format of an SIB1 request signal

First, the signal format may be a random access (RA) preamble or a portion of the RA preamble. Alternatively, the signal format may be in the form of a sounding reference signal (SRS). Alternatively, the signal format may be a newly defined uplink control information (UCI) format. Alternatively, the signal format may reuse existing UCI, such as a scheduling request (SR). Alternatively, the request signal may be transmitted on a PUSCH by using an MCS designated by the base station or predefined, such as index 0. For PUSCH transmission, an SI-RNTI or another predefined constant RNTI may be used. Alternatively, an RNTI previously indicated by the base station may be used or an RNTI calculated based on information transmitted in an SSB or information included in SIB1 resource configuration information may be used.

When a payload size of the UE is one bit or more, for a PRACH, the payload may be represented by selection of a sequence from a plurality of preset sequences and selection of a RACH occasion space from a plurality of preset RACH occasion spaces based on a cyclic shift value for the selected sequence, a transmission resource space, or a combination of the cyclic shift value and the transmission resource space. Similarly, the payload may be represented by selection of a sequence from a plurality of preset sequences, a cyclic shift value for the selected sequence, a transmission resource space, or a combination nof the sequence selection, the cyclic shift value, and the transmission resource space. . For a PUCCH, a payload may be configured and encoded using existing PUCCH formats 0, 1, 2, 3, or the like. In particular, when payload-size information is indicated during scheduling of the request signal by the base station, a PUCCH format based on the payload-size information may be determined.

### ② Method for configuring an SIB1 request signal payload

When the content payload size of the request signal transmitted by the UE is zero bits or a field indicating whether an SIB is requested is absent from the payload, the base station transmits SIB1 upon detecting the request signal. When the content payload size is one bit or more, the request signal may include one or more of the following types of information.
- Whether to request SIB1 transmission
- Whether to request an ACK (Acknowledgement) for the SIB1 transmission request
- Information indicating a preferred band
- Preferred time offset (minimum or maximum interval between the request signal and the SIB1 signal)
- Information indicating a request maintenance duration or a number of times the base station maintains SIB1 transmission
- Priority
- A portion of UE capability information: UE category, available bandwidth, whether HD (Half-Duplex)-FDD is used, or the like.
- CRC (Cyclic Redundancy Check) (using SI-RNTI, a new constant RNTI, or an RNTI indicated by the base station)

### Embodiment 4. Method for a subsequent operation of base station in response to an SIB1 request

The method of Embodiment 4 applies when the base station receives the request signal transmitted according to Embodiment 3. The method may be generally divided into a method for transmitting an ACK in response to the request, a method for retransmitting an SSB including SIB1 configuration information, and a method for transmitting only SIB1 without an SSB.

### ① Method for transmitting an ACK in response to a request

The base station may transmit a predefined ACK to the UE to provide prompt feedback indicating whether the base station will transmit SIB1. The feedback may be provided by transmitting a special SSB of a predefined type or transmitting a DCI of a predefined type in CORESET zero. Alternatively, the scheduling information for the ACK may be previously indicated by the base station. The ACK may be always transmitted in response to an SIB1 request or may be transmitted only upon request by the UE. In addition to the ACK, a NACK (Negative Acknowledgement) indicating that the base station will not transmit SIB1 may be transmitted. When the payload size of the ACK is one bit or more, the ACK may include one or more of the following types of information.
- Whether the response is ACK/NACK
- Information identifying a CORESET resource for transmission of SIB1 scheduling DCI
- Information indicating a time for transmission of SIB1 scheduling DCI
- Information indicating a transmission time of an SSB including SIB1 configuration information
- Information indicating a frequency band in which an SSB including SIB1 configuration information is transmitted
- Uplink resource information for an alternative SIB1 request

Based on the ACK message, the UE may refrain from accessing the cell, may receive SIB1 information at a location indicated by the base station, or may retransmit the same SIB1 transmission request message or an SIB1 transmission request message having an improved format related to the initial form.

### ② Method for retransmitting SSB

The base station may perform a legacy SIB1 transmission operation for the next SSB in response to the request from the UE. The next SSB may be the earliest SSB transmitted in the same band after the base station receives the request within the same band. Alternatively, the next SSB may be an SSB at the same location (index) in the next period (20 ms). Accordingly, the initial SSB referenced by the UE and the SSB including SIB1 configuration information are transmitted 20 ms apart. Alternatively, the next SSB may be the first SSB at the same location (index) after the UE request signal or the ACK signal for the request. Selection of the first SSB at the same location may be applied, for example, when the time gap between the initial SSB and the end of transmission of the UE request signal is 20 ms or more. Alternatively, rather than the initial SSB, an SSB transmitted after a time interval defined in the standard or requested by the UE may include SIB1 scheduling information. A minimum or maximum time gap between the UE request signal and the SSB including SIB1 configuration information may be specified by the standard, indicated by the base station, or requested by the UE.

An SSB associated with the legacy SIB1 transmission operation may be transmitted in a band different from the band of the initial SSB received by the UE. When another existing band is indicated and k_SSB has a specific value (between 24 and 29 for FR1 and between 12 and 13 for FR2), an alternative SSB frequency location indicated by controlResourceSetZero and searchSpzceZero may identify the band for transmitting the SSB associated with the legacy SIB1 transmission operation. Alternatively, the SSB associated with the legacy SIB1 transmission operation may have an SSB index not previously used. For example, a base station previously transmitting an SSB only at a first index for power saving may transmit an SSB including SIB1 indication information in a second index. The index offset value may be predefined or indicated by the base station. In addition, a QCL (Quasi Co Location) relationship may be maintained between the initial SSB detected by the UE and the SSB including SIB1 information transmitted as a response to the request.

### ③ Method for transmitting SIB1 without retransmitting SSB

In another method, a DCI for scheduling SIB1 may be transmitted in CORESET zero defined in the existing SSB in response to the request. The SIB1 scheduling DCI may use the same format as a DCI used to schedule existing SIB1 transmission and may be transmitted at, after, or within a specific time. The specific time may be expressed in a physical time unit or a slot unit, and a value of the specific time may be specified by the standard, indicated by the base station, or requested by the UE.

The SIB1 may be transmitted only once per request or may be transmitted for a duration predefined by the standard. For example, all SSBs of the next frame after the frame in which the UE transmits the request may include SIB1 information. Alternatively, under the foregoing frame condition, SIB1 may be transmitted periodically a number of times specified by the standard, previously indicated by the base station, or requested by the UE.

Example 1: When the UE includes Priority information in the request, the base station may transmit SIB1 a number of times determined based on the Priority information and within a time period determined based on the Priority information.

Each of the embodiments provided in the present disclosure may be applied independently or in any combination. In addition, a new term used in the present disclosure may be assigned an arbitrary name facilitating understanding of the meaning, and the technical idea of the present disclosure may be equally applied when another term having the same meaning is used.

Hereinafter, configurations of a UE and a base station capable of implementing some or all of the present embodiments described with reference to FIGS. 1 to 9 will be described with reference to the drawings. Repetition of the foregoing description may be omitted, and the omitted description may apply in substantially the same manner to the configurations described below unless application of the omitted description contradicts the technical idea of the invention.

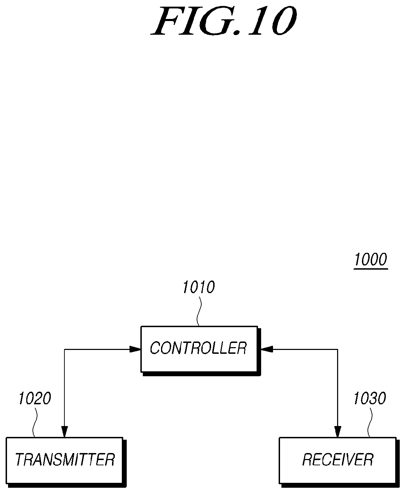

FIG. 10 is a block diagram illustrating a UE 1000 according to an embodiment.

Referring to FIG. 10, a UE 1000 according to an embodiment include a transmitter 1020, a receiver 1030, and a controller 1010 configured to control operations of the transmitter and the receiver.

The controller 1010 controls overall operations of the UE 1000 to implement the method for configuring a request operation for system information in wireless communication described in the present disclosure.

The controller 1010 may confirm non-transmission of a system information block following transmission of a synchronization signal block from a base station.

When a cell to which the controller 1010 intends to connect is configured for on-demand SIB1 transmission upon a request from a UE, the controller 1010 cannot receive the SIB1 unless the UE 1000 transmits a separate request.

For on-demand SIB1 transmission, the controller 1010 may confirm non-transmission of the system information block by receiving information indicating a cell configuration for transmitting the system information block upon request (On-Demand SIB1). The information indicating a cell configuration for transmitting SIB1 on-demand may include either information for preventing a legacy UE lacking support for an On-Demand SIB1 function from accessing the base station or information notifying a UE supporting the On-Demand SIB1 function whether the base station supports the On-Demand SIB1 function.

According to an embodiment, the information indicating a cell configuration for transmitting the system information block upon request may include a frequency offset for the synchronization signal block equal to or greater than a first reference value in frequency range 1 (FR1) and equal to or greater than a second reference value in frequency range 2 (FR2). Specifically, k_SSB, a parameter indicating the frequency offset, may be set to an invalid value, namely, 24 or more in the case of FR1 and 12 or more in the case of FR2. For example, when the base station transmits a k_SSB value of 30 in FR1 or 14 in FR2, the controller 1010 may identify the received k_SSB value as invalid and determine a need to transmit an SIB1 request to the base station. In another example, the first reference value may be set to be greater than the second reference value.

The controller 1010 may receive configuration information including uplink resource information for transmitting a request signal for the system information. According to an embodiment, the configuration information may be generated based on cell configuration information of a cell to which the UE previously connected. Specifically, the base station may obtain the configuration information based on cell configuration information received from a previous cell. The cell configuration information may include information related to an SSB configuration value for a cell to which On-Demand SIB1 is applied and information such as a relative uplink resource location, format, and the like. The configuration information may include information on at least one of a frequency band, a frequency domain location, a time domain location, a subcarrier spacing, a signal format, and a sequence used for the transmission of the request signal for the system information.

Specifically, the configuration information may include at least one type of uplink resource information, such as uplink transmission space band information in which an SIB request may be transmitted, frequency location information within the uplink transmission space band in which the SIB request may be transmitted, time location information within the uplink transmission space band in which the SIB request may be transmitted, or uplink transmission space band subcarrier spacing information in which the SIB request may be transmitted.

In addition, the configuration information may further include at least one of signal format information to be used for the SIB request, such as a PRACH format, a sequence, a PUCCH, or an MCS, a requestable SIB type, PDSCH resource allocation information for an SIB to be transmitted upon request, new CORESET information for SIB scheduling information to be transmitted upon request or information indicating whether to reuse a current CORESET, resource allocation information for an ACK/NACK or other feedback to be transmitted when the UE transmits the SIB request, or information such as an RNTI to be used when the UE transmits the request.

The controller 1010 may transmit a request signal for the system information based on the configuration information. The controller 1010 may configure the request signal for the system information based on the received configuration information and transmit the configured request signal using an uplink resource.

According to an embodiment, the controller 1010 may configure the format of the request signal for the system information as a random access preamble (RA Preamble) or a portion of the random access preamble. Accordingly, at least some PRACH resources may be used for the SIB1 request. In an example, the request signal may include at least one of information identifying a sequence selected from a plurality of preset sequences, a cyclic shift value, and a transmission resource space, or information identifying a RACH occasion space selected from a plurality of preset RACH occasion spaces defined by a combination of the preset sequence, the cyclic shift value, and the transmission resource space.

Upon receiving the SIB1 request from the UE, the base station may transmit the SIB1 to the UE.

According to the embodiments, a method and apparatus may be provided for configuring a request operation for system information in wireless communication to enable efficient transmission of system information. In addition, the base station does not transmit system information until the base station receives a request for the system information, thereby reducing operational power consumption in an environment with few users.

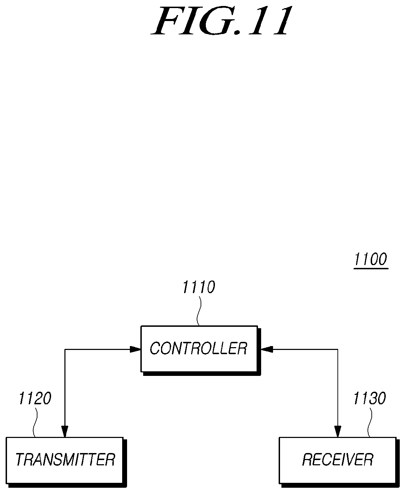

FIG. 11 is a block diagram illustrating a configuration of a base station 1100 according to an embodiment.

Referring to FIG. 11, a base station 1100 according to an embodiment comprises a transmitter 1120, a receiver 1130, and a controller 1110 configured to control operations of the transmitter and the receiver.

The controller 1110 may inform the UE of non-transmission of the system information block following the transmission of the synchronization signal block from the base station. When the base station is configured for On-Demand SIB1 transmission upon a request from the UE, the controller 1110 does not transmit SIB1 unless the UE transmits a separate request.

For on-demand SIB1 transmission, the controller 1110 may inform the UE of non-transmission of the system information block by transmitting information indicating a cell configuration for transmitting the system information block upon request (On-Demand SIB1). The information indicating a cell configuration for transmitting SIB1 on-demand may include either information for preventing a legacy UE lacking support for an On-Demand SIB1 function from accessing the base station or information notifying a UE supporting the On-Demand SIB1 function whether the base station supports the On-Demand SIB1 function.

According to an embodiment, the information indicating a cell configuration for transmitting the system information block upon request may include a frequency offset for the synchronization signal block equal to or greater than a first reference value in frequency range 1 (FR1) and equal to or greater than a second reference value in frequency range 2 (FR2). Specifically, k_SSB, a parameter indicating the frequency offset, may be set to an invalid value, namely, 24 or more in the case of FR1 and 12 or more in the case of FR2. For example, when the base station transmits a k_SSB value of 30 in FR1 or 14 in FR2, the UE may identify the received k_SSB value as invalid and determine a need to transmit a SIB1 request to the base station. In another example, the first reference value may be set to be greater than the second reference value.

The controller 1110 may transmit configuration information including uplink resource information for receiving a request signal for the system information. According to an embodiment, the configuration information may be generated based on cell configuration information for a cell to which the UE was previously connected. That is, the controller 1110 may obtain the configuration information based on cell configuration information received from a previous cell. The corresponding cell configuration information may include information related to an SSB configuration value for a cell to which of On-Demand SIB1 is applied and information such as a relative uplink resource location, format, and the like. The configuration information may include information on at least one of a frequency band, a frequency domain location, a time domain location, a subcarrier spacing, a signal format, and a sequence used for the transmission of the request signal for the system information.

Specifically, the configuration information may include at least one type of uplink resource information, such as uplink transmission space band information in which an SIB request may be transmitted, frequency location information within the uplink transmission space band in which the SIB request may be transmitted, time location information within the uplink transmission space band in which the SIB request may be transmitted, or uplink transmission space band subcarrier spacing information in which the SIB request may be transmitted.

In addition, the configuration information may further include at least one of signal format information to be used for the SIB request, such as a PRACH format, a sequence, a PUCCH, or an MCS, a requestable SIB type, PDSCH resource allocation information for SIB scheduling information to be transmitted upon request or information indicating whether to reuse a current CORESET, resource allocation information through for an ACK/NACK or other feedback to be transmitted when the UE transmits the SIB request, or information such as an RNTI to be used when the UE transmits the request.

The controller 1110 may receive the request signal for the system information based on the configuration information. The controller 1110 may receive the request signal for the system information, which is configured based on the configuration information, from the UE using the uplink resource information included in the configuration information.

According to an embodiment, the UE may configure the format of the request signal for the system information as a random access preamble (RA preamble) or a portion of the random access preamble. Accordingly, at least some PRACH resources may be used for the SIB1 request. In an example, the request signal may include at least one of information identifying a sequence selected from a plurality of preset sequences, a cyclic shift value, and a transmission resource space, or information identifying a RACH occasion space selected from a plurality of preset RACH occasion spaces defined by a combination of the preset sequence, the cyclic shift value, and the transmission resource space.

Upon receiving the SIB1 request from the UE, the controller 1110 may transmit SIB1 to the UE.

According to the embodiments, a method and apparatus may be provided for configuring a request operation for system information in wireless communication to enable efficient transmission of system information. In addition, the base station does not transmit system information until the base station receives a request for the system information, thereby reducing operational power consumption in an environment with few users.

The above-described embodiments may be supported by standard documents disclosed in at least one of wireless access systems, IEEE 802, 3GPP, and 3GPP2. That is, steps, configurations, and parts not described to clearly reveal the technical spirit among the present embodiments may be supported by the aforementioned standard documents. In addition, all terms disclosed in the present specification may be explained by the standard documents disclosed above.

The above-described embodiments may be implemented through various means. For example, the present embodiments may be implemented by hardware, firmware, software, or a combination thereof.

In the case of implementation by hardware, the method according to the present embodiments may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

In the case of implementation by firmware or software, the method according to the present embodiments may be implemented in the form of an apparatus, a procedure, a function, or the like that performs the functions or operations described above. Software codes may be stored in a memory unit and driven by a processor. The memory unit may be located inside or outside the processor, and may exchange data with the processor by various already known means.

In addition, terms such as "system", "processor", "controller", "component", "module", "interface", "model", or "unit" described above may generally mean a computer-related entity hardware, a combination of hardware and software, software, or software in execution. For example, the aforementioned components may be, but are not limited to, a process run by a processor, a processor, a controller, a control processor, an object, an execution thread, a program, and/or a computer. For example, both an application running on a controller or processor and the controller or processor may be components. One or more components may be within a process and/or an execution thread, and the components may be located in one device (e.g., a system, a computing device, etc.) or distributed across two or more devices.

The above description is merely illustrative of the technical spirit of the present disclosure, and those of ordinary skill in the art to which the present disclosure pertains will be able to make various modifications and variations without departing from the essential characteristics of the technical spirit. In addition, the present embodiments are not intended to limit the technical spirit of the present disclosure, but to explain it, and thus the scope of the technical spirit is not limited by these embodiments. The scope of protection of the present disclosure should be interpreted by the claims below, and all technical spirits within the scope equivalent thereto should be interpreted as being included in the scope of rights of the present disclosure.

### CROSS-REFERENCE TO RELATED APPLICATION

This patent application claims priority under 35 U.S.C. § 119(a) to Korean Patent Application No. 10-2024-0016172, filed in Korea on February 2, 2024 and Korean Patent Application No. 10-2025-0011317, filed in Korea on January 24, 2025, the entire contents of which are incorporated herein by reference. In addition, this patent application claims priority for countries other than the United States for the same reasons as above, and the entire contents thereof are incorporated herein by reference.

## Claims

1. A method of configuring, by a user equipment (UE), a request operation for system information in wireless communication, the method comprising:
confirming that a system information block is not transmitted after a transmission of a synchronization signal block from a base station;
receiving configuration information comprising uplink resource information for transmitting a request signal for the system information; and
transmitting the request signal for the system information based on the configuration information.

2. The method of claim 1, wherein the confirming that the system information block is not transmitted comprises:
receiving information indicating that a cell is configured to transmit the system information block upon request.

3. The method of claim 2, wherein the information indicating that the cell is configured to transmit the system information block upon request is configured such that a frequency offset for the synchronization signal block is equal to or greater than a first reference value in frequency range 1 (FR1) and is equal to or greater than a second reference value in frequency range 2 (FR2), and
wherein the first reference value is set to 24 or more, and the second reference value is set to 12 or more.

4. The method of claim 1, wherein the configuration information comprises:
information on at least one of a frequency band, a frequency domain location, a time domain location, a subcarrier spacing, a signal format, and a sequence used for the transmission of the request signal for the system information.

5. The method of claim 1, wherein the configuration information is based on cell configuration information for a cell to which the UE was previously connected.

6. A method of configuring, by a base station, a request operation of system information in wireless communication, the method comprising:
informing a user equipment (UE) that a system information block is not transmitted after a transmission of a synchronization signal block from the base station;
transmitting configuration information comprising uplink resource information for receiving a request signal for the system information; and
receiving the request signal for the system information based on the configuration information.

7. The method of claim 6, wherein the informing the UE that the system information block is not transmitted comprises:
transmitting information indicating that a cell is configured to transmit the system information block upon request.

8. The method of claim 7, wherein the information indicating that the cell is configured to transmit the system information block upon request is configured such that a frequency offset for the synchronization signal block is equal to or greater than a first reference value in frequency range 1 (FR1) and is equal to or greater than a second reference value in frequency range 2 (FR2), and
wherein the first reference value is set to 24 or more, and the second reference value is set to 12 or more.

9. The method of claim 6, wherein the configuration information comprises:
information on at least one of a frequency band, a frequency domain location, a time domain location, a subcarrier spacing, a signal format, and a sequence used for the transmission of the request signal for the system information.

10. The method of claim 6, wherein the configuration information is based on cell configuration information to which the UE was previously connected.

11. A user equipment (UE) configuring a request operation for system information in wireless communication, the UE comprising:
a transmitter;
a receiver; and
a controller configured to control operations of the transmitter and the receiver,
wherein the controller is configured to:
confirm that a system information block is not transmitted after a transmission of a synchronization signal block from a base station, receive configuration information comprising uplink resource information for transmitting a request signal for the system information, and transmit the request signal for the system information based on the configuration information.

12. The UE of claim 11, wherein the controller is configured to:
confirm that the system information block is not transmitted by receiving information indicating that a cell is configured to transmit the system information block upon request.

13. The UE of claim 12, wherein the information indicating that the cell is configured to transmit the system information block upon request is configured such that a frequency offset for the synchronization signal block is equal to or greater than a first reference value in frequency range 1 (FR1) and is equal to or greater than a second reference value in frequency range 2 (FR2), and
wherein the first reference value is set to 24 or more, and the second reference value is set to 12 or more.

14. The UE of claim 11, wherein the configuration information comprises:
information on at least one of a frequency band, a frequency domain location, a time domain location, a subcarrier spacing, a signal format, and a sequence used for the transmission of the request signal for the system information.

15. The UE of claim 11, wherein the configuration information is based on cell configuration information for a cell to which the UE previously connected.
